# EUROPÄISCHE PATENTSCHRIFT

(11) **EP 2 994 348 B1**
(45) Veröffentlichungstag und Bekanntmachung des Hinweises auf die Patenterteilung: **14.07.2021**
(21) Anmeldenummer: 14726505.2
(22) Anmeldetag: 30.04.2014
(51) Int. Cl.: B60Q 1/00, F21S 41/151, F21S 41/155, F21S 43/14, F21S 43/145, F21S 41/24, F21S 43/239, F21S 43/243, F21S 43/249, F21S 43/251, F21Y 105/00, F21Y 115/20

(54) **BELEUCHTUNGSEINRICHTUNG FÜR KRAFTFAHRZEUGE**
LIGHTING SYSTEM FOR MOTOR VEHICLES
DISPOSITIF D'ÉCLAIRAGE POUR VÉHICULES À MOTEUR

(30) Priorität: 08.05.2013 AT 503132013
(43) Veröffentlichungstag der Anmeldung: 16.03.2016
(73) Patentinhaber: ZKW Group GmbH, 3250 Wieselburg (AT)
(72) Erfinder: REINPRECHT, Markus, 3384 Pielachhäuser (AT); MIEDLER, Stefan, A-3105 Unterradlberg (AT); BÖHM, Gerald, A-3370 Ybbs (AT); TEUFL, Adolf, A-3300 Amstetten (AT); EDLETZBERGER, Thomas, A-3382 Loosdorf (AT)
(74) Vertreter: Patentanwaltskanzlei Matschnig & Forsthuber OG
(86) Internationale Anmeldenummer: PCT/AT2014/050111
(87) Internationale Veröffentlichungsnummer: WO 2014/179824

(56) Entgegenhaltungen:
- EP-A2- 2 541 128
- DE-A1-102004 004 398
- DE-A1-102007 021 865
- DE-U1- 29 920 487
- FR-A1- 2 957 133
- US-A1- 2009 262 545
- US-A1- 2013 027 956
- None

## Beschreibung

Die Erfindung bezieht sich auf eine Beleuchtungseinrichtung für Kraftfahrzeuge mit einem Lichtleitelement, welches eine Lichteintrittsfläche und eine Lichtaustrittsfläche aufweist, wobei ein Lichtleiter vorgesehen ist, der zumindest eine Einspeisestelle für Licht zumindest einer Lichtquelle aufweist, wobei der Lichtleiter stabförmig ausgebildet ist und entlang zumindest eines Teils seiner Länge eine Störstellenanordnung sowie eine dieser gegenüberliegende Lichtaustrittsfläche aufweist und die Lichteintrittsfläche des Lichtleitelements lichttechnisch an die Lichtaustritts fläche des stabförmigen Lichtleiters anschließt.

Beleuchtungseinrichtungen dieser Art werden heutzutage im Kraftfahrzeugbereich vielfach verwendet, beispielsweise finden sich solche Lichtleitelemente um die Austrittsöffnungen von Scheinwerfern herum angeordnet, wobei beispielsweise von Leuchtdioden stammendes Licht in die Lichteintrittsfläche eingestrahlt und nach vorne abgestrahlt wird. Neben der eigentlichen Beleuchtungsfunktion sind vielfach auch Motive des Designs für die Ausgestaltung und die Geometrie derartiger Lichtleitelemente wesentlich. Neben der Verwendung im Bereich von Frontscheinwerfern werden solche Beleuchtungseinrichtungen auch für eine Innenraumbeleuchtung oder seitlich bzw. am Heck von Kraftfahrzeugen angeordnet. Es sind Lösungen bekannt, bei welchen Seitenflächen des Lichtleitelementes mit einer Störstellen-Strukturierung versehen sind, sodass dass das in die Lichteintrittsfläche eingestrahlte Licht an den Störstellen gestreut und auch seitlich abgestrahlt wird.

Eine Beleuchtungseinrichtung dieser Art ist beispielsweise in der DE 10 2010 054 923 A1 im Zusammenhang mit einem Frontscheinwerfer gezeigt, wogegen die DE 10 2011 050 422 A1 eine ähnliche Anwendung bei einer Heckleuchte eines Kraftfahrzeuges offenbart.

EP 2 541 128 A2 offenbart eine gattungsgemäße Beleuchtungseinrichtung für Kraftfahrzeuge.

Eine Aufgabe der Erfindung liegt in der Schaffung einer Beleuchtungseinrichtung der gegenständlichen Art, welche eine Lichtabstrahlung nicht nur aus der Lichtaustrittsfläche sondern auch seitlich ermöglicht. Dabei sollen einerseits keine aufwändigen Strukturierungen des Lichtleitelementes erforderlich sein und andererseits soll eine hohe Flexibilität hinsichtlich der Qualität des abgestrahlten Lichtes (Intensität, Farbe) möglich sein.

Zur Lösung dieser Aufgabe sieht die Erfindung vor, dass zumindest teilweise an zumindest einer Oberfläche des Lichtleitelementes, ausgenommen die Lichteintrittsfläche, eine elektrische Leuchtschicht vorgesehen ist, welche durchscheinend ausgebildet ist.

Tatsächlich lassen sich bei einer erfindungsgemäßen Beleuchtungseinrichtung für einen Betrachter auf einfache Weise Tiefeneindrücke bzw. 3-D Effekte erzielen, für welche nach dem Stand der Technik aufwändige Lichtleiterkombinationen und -strukturen erforderlich waren. Auch können bei für einen Betrachter scheinbar gleicher Geometrie mehrere Lichtfunktionen realisiert werden.

Derartige Leuchtschichten, die beispielsweise als so genannte "OLED"-Schichten ausgebildet sein können, ermöglichen eine Beleuchtung in unterschiedlichen Farben und sind fertigungstechnisch insofern problemlos, als sie sehr dünn hergestellt werden können.

An dieser Stelle ist zu erwähnen, dass die Verwendung von OLED-Schichten im Zusammenhang mit Kraftfahrzeugbeleuchtungen aus der DE 10 2009 009 087 A1 bekannt geworden ist, wobei in diesem Dokument eine Beleuchtungseinrichtung für ein Kraftfahrzeug gezeigt ist, bei welcher vor einem Reflektor für eine erste Lichtquelle eine den Reflektor abdeckende dünne, flächige organische Leuchtdiode (OLED) angeordnet ist, wodurch beispielsweise die Lichtfunktionen einer Nebelschlussleuchte und eines Schlusslichtes überlagert werden können.

Wie bereits erwähnt ist bei einer vorteilhaften Ausführungsform vorgesehen, dass die Leuchtschicht als OLED-Schicht ausgebildet ist, doch ist es auch möglich, die Leuchtschicht beispielsweise als Elektrolumineszenz-Schicht auszubilden.

Gemäß der Erfindung ist ein stabförmiger Lichtleiter vorgesehen, der zumindest eine Einspeisestelle für Licht zumindest einer Lichtquelle aufweist, der Lichtleiter entlang zumindest eines Teiles seiner Länge eine Störstellenanordnung sowie eine dieser gegenüberliegende Lichtaustrittsfläche aufweist und die Lichteintrittsfläche des Lichtleitelementes lichttechnisch an die Lichtaustrittsfläche des stabförmigen Lichtleiters anschließt. Die Verwendung eines solchen, in der Beleuchtungstechnik für Kraftfahrzeuge bestens bekannten (z.B. AT 503 926 B1) stabförmigen Lichtleiters ergibt eine gute Ausleuchtung, die auch von nur einer einzigen Lichtquelle ausgehen kann, die an der Einspeisestelle sitzt, wobei sich Leuchtdioden als Lichtquellen besonders eignen.

Weiters kann vorgesehen sein, dass das Lichtleitelement als Hohlzylinder ausgebildet ist, wobei die beiden Endflächen der Zylinderwand die Lichteintritts- und die Lichtsaustrittsfläche bilden. Eine derartige Geometrie ist beispielsweise im Zusammenhang mit Frontleuchten bei Kraftfahrzeugen flexibel einzusetzen. Insbesondere kann vorgesehen sein, dass die Zylinderwand zumindest abschnittsweise die Lichtaustrittsöffnung eines Scheinwerfermoduls umgibt.

Es ist weiters zweckmäßig, wenn der stabförmige Lichtleiter in seiner Geometrie der Lichteintrittsfläche des Lichtleitelementes angepasst ist, um Lichtverluste zu vermeiden und um die Konstruktion zu vereinfachen.

Im Allgemeinen ist es vorzuziehen, wenn das Lichtleitelement aus einem transparenten Material besteht. Auf diese Weise ergeben sich geringe Lichtverluste und eine unnötige Erwärmung des Lichtleitelementes wird vermieden. Dies bedeutet jedoch nicht, dass in gewissen Fällen von der Forderung nach Transparenz abgegangen und ein opakes Material verwendet werden kann, wenn besondere Lichteffekte gewünscht sind.

Insbesondere bei Ausbildung des Lichtleitelementes als Hohlzylinder ist es in vielen Fällen ästhetisch besonders zufriedenstellend, wenn eine elektrische Leuchtschicht an Außenflächen des Hohlzylinders vorgesehen ist.

Andere ästhetische Eindrücke ergeben sich, weil die elektrische Leuchtschicht durchscheinend ausgebildet ist.

Die Erfindung samt weiteren Vorteilen ist im Folgenden anhand beispielsweise Ausführungsformen näher erläutert, die in der Zeichnung dargestellt sind. In dieser zeigen
Fig. 1 den prinzipiellen Aufbau einer Beleuchtungseinrichtung nach der Erfindung zusammen mit einem stabförmigen Lichtleiter in teilweiser und perspektivischer Ansicht,
Fig. 2 eine Variante, die nicht ein Teil der Erfindung ist, bei welcher anstelle eines stabförmigen Lichtleiters einzelne Lichtquellen vorgesehen sind und
Fig. 3 eine Variante, bei welcher das Lichtleitelement in Form eines Hohlzylinders ausgebildet ist und die Lichtaustrittsfläche eines Scheinwerfermoduls umgibt, gleichfalls im teilweiser und perspektivischer Darstellung.

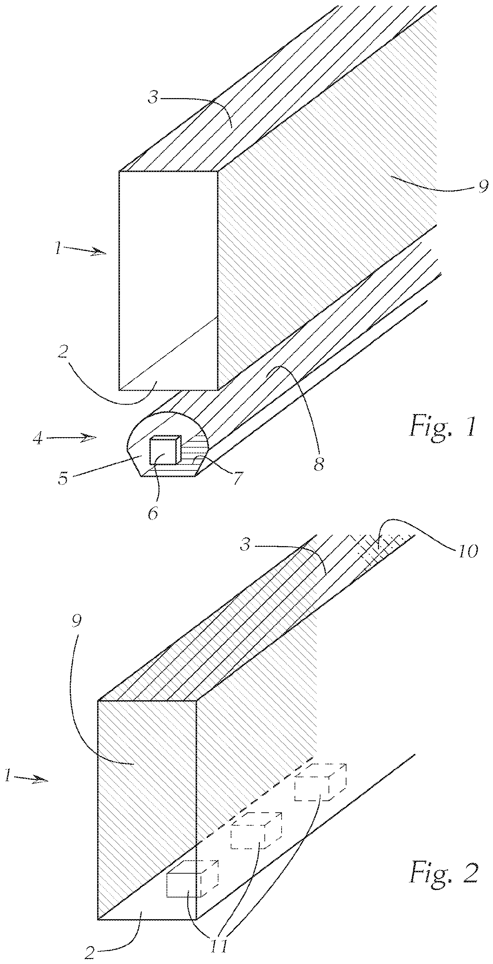

Unter Bezugnahme auf Fig. 1 erkennt man ein quaderförmiges Lichtleitelement 1, welches vorteilhafterweise aus einem vollständig transparenten Material, insbesondere aus Kunststoff, ausgebildet ist und welches eine Lichteintrittsfläche 2 sowie eine Lichtaustrittsfläche 3 besitzt. Dem Lichtleitelement 1, das auch als Dickwandoptik bezeichnet werden könnte, ist ein stabförmiger Lichtleiter 4 zugeordnet, der eine Einspeisestelle für Licht aufweist, hier eine Stirnfläche 5, an der im vorliegenden Fall als Lichtquelle ein LED-Element 6 vorgesehen ist. Der Lichtleiter 4 besitzt hier an einer ebenen unteren Fläche eine Störstellenanordnung 7 und weist diese gegenüberliegend eine Lichtaustrittsfläche 8 auf, die im vorliegenden Fall etwa zylindrisch ausgebildet ist, jedoch ebenso gut eben sein oder eine andere Form aufweisen könnte. Lichtleiter dieser Art sind bekannt, wobei das von der Lichtquelle 6, hier einem LED-Element, eingespeiste Licht längs des Lichtleiters 4 reflektiert und von der Störstellenanordnung 7, z.B. ein Array von kleinen Prismen, über die Lichtaustrittsfläche 8 nach außen abgestrahlt wird.

Es ist ersichtlich, dass das von der Lichtsaustrittsfläche 8 austretende Licht in die Eintrittsfläche 2 des quaderförmigen Lichtleitelementes 1 eintritt und hauptsächlich an der gegenüberliegenden Lichtaustrittsfläche 3 zu Beleuchtungszwecken austritt, wobei die Anordnung beispielsweise für Positionsleuchten in einem Kraftfahrzeug verwendet werden kann. In dem Beispiel nach Fig. 1 sind zur Vereinfachung sowohl der Lichtleiter 4 als auch das Lichtleitelement 1 geradlinig ausgebildet, doch soll es klar sein, dass der Lichtleiter beliebig gekrümmt sein kann, wobei eine Anpassung der Krümmung zwischen dem Lichtleitelement 1 und dem Lichtleiter 4 im allgemeinen vorgenommen wird. Auch kann das Licht in den Lichtleiter 4 nicht nur an einer einzigen Position, wie hier an der Stirnfläche 5 eingespeist werden, sondern beispielsweise an beiden Stirnflächen des Lichtleiters oder zusätzlich an in den Lichtleiter einmündenden Verzweigungen.

Um eine zusätzliche Beleuchtungsquelle zu schaffen, ist in Fig. 1 lediglich an einer Seitenfläche, hier der im Bild rechten, eine elektrische Leuchtschicht 9 aufgebracht. Vorteilhafterweise ist eine solche Leuchtschicht als OLED-Schicht ausgebildet. Darunter versteht man eine organische Leuchtdiode, die ein leuchtendes Dünnschichtbauelement aus organischen halbleitenden Materialen darstellt und die bei Anlegen einer Spannung je nach Zusammensetzung in verschieden Farben leuchten kann. Dabei kann die OLED-Schicht auch transparent, somit durchscheinend ausgebildet sein.

Wenngleich in dem Beispiel nach Fig. 1 lediglich eine Seitenfläche mit einer elektrischen Leuchtschicht versehen ist, sollte es klar sein, dass auch andere Oberflächen des Lichtleitelementes vollständig oder teilweise mit einer solchen Leuchtschicht versehen sein können.

Zusätzlich können Seitenflächen des Lichtleitelementes mit ähnlichen oder anderen Leuchtschichten versehen sein, wobei die Wahl der Farbe und/oder Intensität des von den jeweiligen Leuchtschichten abgestrahlten Lichtes den entsprechenden Erfordernissen angepasst ist.

Es ist anzumerken, dass im Rahmen der Erfindung Leuchtschichten nicht notwendigerweise als OLED-Schichten ausgebildet sein müssen, sondern dass auch Elektroluminiszenzschichten vorgesehen sein können. Elektrolumineszenzfolien sind im Handel erhältlich und strahlen bei Anlegen einer Wechselspannung Licht ab. Sie können gleichfalls transparent ausgebildet sein.

Fig. 2 zeigt wieder eine Beleuchtungseinrichtung, die nicht ein Teil der Erfindung ist, die jener nach Fig. 1 insoferne gleicht, als auch sie ein quaderförmiges Lichtleitelement 1 mit einer Lichteintrittsfläche 2 und einer Lichtaustrittsfläche 3 besitzt. Im vorliegenden Fall ist eine elektrische Leuchtschicht 9 an der im Bild linken Längsfläche des Lichtleitelementes 1 ausgebildet und es ist angedeutet, dass eine weitere elektrische Leuchtschicht 10 auch an der Lichtaustrittsfläche 3 vorgesehen sein kann, wobei sie in diesem Fall zwingend durchscheinend konzipiert sein muss.

Im Unterschied zu Fig. 1 sind hier an der Lichteintrittsfläche 2 des Lichtleitelementes 1 drei einzelne LED-Elemente 11 als Lichtquellen angeordnet, deren Licht das Lichtleitelement 1 durchsetzt und an der Lichtaustrittsfläche 3 zu Beleuchtungszwecken austritt. Je nach Geometrie und Konstruktion des Lichtleitelementes 1 kann ein Teil des an der Lichteintrittsfläche 2 eingespeisten Lichtes auch an Seitenflächen austreten.

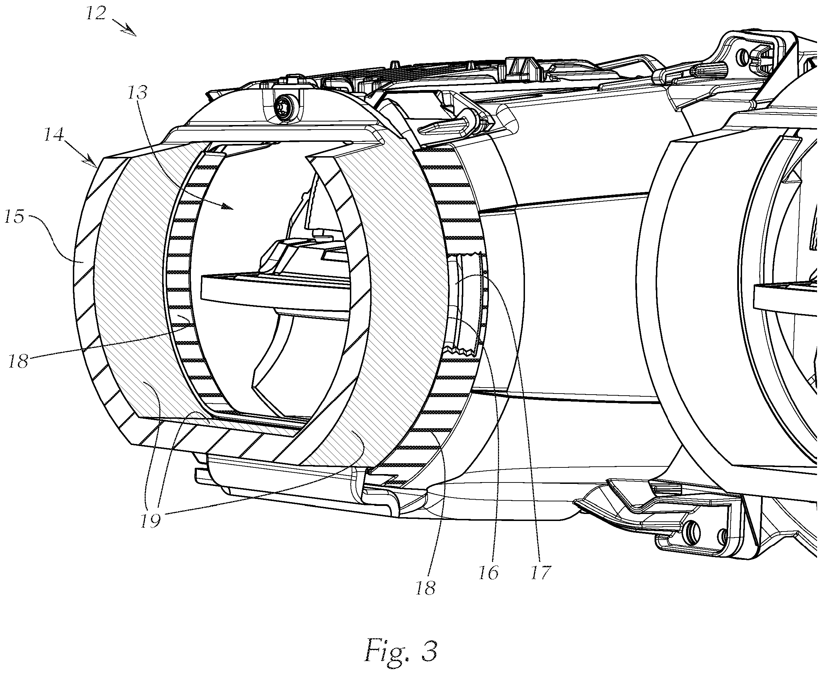

Fig. 3 zeigt eine komplexere Ausbildung einer Beleuchtungseinrichtung nach der Erfindung in Kombination mit einem Scheinwerfermodul 12. Dieses Scheinwerfermodul 12 kann beispielsweise zur Erzeugung eines herkömmlichen Abblendlichtes dienen und besitzt eine Lichtaustrittsöffnung 13. Diese Öffnung 13 ist über den größten Teil ihres Umfanges von einem Lichtleitelement 14 umgeben, welches als Hohlzylinder mit einer planen, nach vorne weisender Lichtaustrittsfläche 15 ausgebildet ist. Der Begriff "nach vorne" ist natürlich im Sinne der Lichtabstrahlung zu verstehen und bedeutet nicht notwendigerweise "in Fahrrichtung eines Fahrzeuges". Gegenüberliegend der Lichtaustrittsfläche 15 besitzt das Lichtleitelement 14 eine Lichteintrittsfläche 16, in welches Licht eines Lichtleiters 17 eingespeist wird. Dieser Lichtleiter 17 entspricht in seiner Geometrie der Ausbildung des Lichtleitelementes 14, das heißt, er umgibt gleichfalls die Lichtaustrittsöffnung 13 des Scheinwerfermoduls 12 und er kann im Prinzip ähnlich ausgebildet sein, wie der in Fig. 1 dargestellte Lichtleiter 4, ist jedoch im Gegensatz zu diesem gebogen. Die Lichteinspeisung kann, was in der Zeichnung nicht ersichtlich ist, an den beiden Enden des Lichtleiters 17 z.B. durch LED-Elemente erfolgen. Von dem Lichtleiter 17 ist nur ein kleiner Abschnitt in Fig. 3 zu sehen, da dieser Lichtleiter bei dem gezeigten Ausführungsbeispiel durch eine umlaufende Blende 18 abgedeckt ist.

Bei dem gezeigten Ausführungsbeispiel sind die Innen- und die Außenflächen des hohlzylindrisch ausgebildeten Lichtleitelementes 14 mit elektrischen Leuchtschichten 19 versehen. Das mit einer erfindungsgemäßen Beleuchtungseinrichtung ausgestattete Scheinwerfermodul 12 weist somit zumindest drei Lichtfunktionen auf, nämlich beispielsweise die erwähnte Abblendlichtfunktion, die von dem Scheinwerfermodul als solches und von einer nicht gezeigten, im Inneren des Moduls 12 angeordneten Lichtquelle stammt, das durch des Lichtleitelement 14 nach vorne abgestrahlte Licht des Lichtleiters 17 und drittens das von den elektrischen Leuchtschichten 19 stammende Licht. Es versteht sich, dass neben den rein technischen Lichtfunktionen dank der Erfindung auch besondere ästhetische Effekte erzielbar sind, die entsprechenden Designvorgaben gerecht werden.

In den Zeichnungen sind die zur Stromversorgung der einzelnen Lichtquellen erforderlichen elektrischen Verbindungsmitteln nicht gezeigt, ebenso wenig deren Strom- und/oder Spannungsquellen, doch stehen diesbezüglich dem Fachmann einschlägige Informationen zur Realisierung zur Verfügung. Es soll auch noch erwähnt sein, dass die elektrischen Leuchtschichten z.B. OLED-Schichten keineswegs vollflächig ausgebildet sein müssen, sondern in gewissen Fällen auch als Streifen oder als andere Strukturen ausgebildet sein können. Die Verwendung elektrischer Leuchtschichten bei der erfindungsgemäßen Beleuchtungseinrichtung bietet auch den besonderen Vorteil, dass so gut wie keine Einschränkung in Hinblick auf die Geometrie des Lichtleitelementes gegeben ist. Die Oberflächen, an die die Leuchtschichten angepasst werden, sind de facto frei definierbar und müssen natürlich nicht plan sein, was beispielsweise aus dem Ausführungsbeispiel der Fig. 3 hervorgeht.

## Patentansprüche

1. Beleuchtungseinrichtung für Kraftfahrzeuge mit einem Lichtleitelement (1, 14), welches eine Lichteintrittsfläche (2, 16) für Licht zumindest einer Lichtquelle (6, 4; 11; 17) und eine Lichtaustrittsfläche (3, 15) aufweist, wobei ein Lichtleiter (4; 17) vorgesehen ist, der zumindest eine Einspeisestelle (5) für Licht zumindest einer Lichtquelle (6) aufweist, wobei der Lichtleiter (4; 17) stabförmig ausgebildet ist und entlang zumindest eines Teils seiner Länge eine Störstellenanordnung (7) sowie eine dieser gegenüberliegende Lichtaustrittsfläche (8) aufweist und die Lichteintrittsfläche (2; 16) des Lichtleitelements (1; 14) lichttechnisch an die Lichtaustrittsfläche (8) des stabförmigen Lichtleiters anschließt, **dadurch gekennzeichnet, dass** zumindest teilweise an zumindest einer Oberfläche des Lichtleitelementes (1, 14), ausgenommen die Lichteintrittsfläche (2,16), eine elektrische Leuchtschicht (9, 10; 19) vorgesehen ist, welche durchscheinend ausgebildet ist.

2. Beleuchtungseinrichtung nach Anspruch 1, **dadurch gekennzeichnet, dass** die Leuchtschicht (9, 10; 19) als OLED-Schicht ausgebildet ist.

3. Beleuchtungseinrichtung nach Anspruch 1, **dadurch gekennzeichnet, dass** die Leuchtschicht (9, 10; 19) als Elektrolumineszenzschicht ausgebildet ist.

4. Beleuchtungseinrichtung nach einem der Ansprüche 1 bis 3, Beleuchtungseinrichtung nach einem der Ansprüche 1 bis 4, **dadurch gekennzeichnet, dass** das Lichtleitelement (14) als Hohlzylinder ausgebildet ist, wobei die beiden Endflächen der Zylinderwand die Lichteintritts- und die Lichtaustrittsfläche (16, 15) bilden.

5. Beleuchtungseinrichtung nach Anspruch 4, **dadurch gekennzeichnet, dass** die Zylinderwand zumindest abschnittsweise die Lichtaustrittsöffnung (13) eines Scheinwerfermoduls (12) umgibt.

6. Beleuchtungseinrichtung nach einem der Ansprüche 1 bis 5, **dadurch gekennzeichnet, dass** der stabförmige Lichtleiter (4; 17) in seiner Geometrie der Lichteintrittsfläche (2; 16) des Lichtleitelementes (1; 14) angepasst ist.

7. Beleuchtungseinrichtung nach einem der Ansprüche 1 bis 6, **dadurch gekennzeichnet, dass** das Lichtleitelement (1; 14) aus einem transparenten Material besteht.

8. Beleuchtungseinrichtung nach einem der Ansprüche 4 bis 7, **dadurch gekennzeichnet, dass** eine elektrische Leuchtschicht (19) an Außenflächen des als Hohlzylinder ausgebildeten Lichtleitelements (14) vorgesehen ist.

## Claims

1. Lighting device for motor vehicles having a light guide element (1, 14) which has a light entry surface (2, 16) for light from at least one light source (6, 4; 11; 17) and a light exit surface (3, 15), a light guide (4; 17) being provided which has at least one feed point (5) for light from at least one light source (6), the light guide (4; 17) is rod-shaped and has, along at least part of its length, an interference point arrangement (7) and a light exit surface (8) opposite the latter, and the light entry surface (2; 16) of the light guide element (1; 14) adjoins the light exit surface (8) of the rod-shaped light guide in terms of light technology, **characterized in that** at least partially on at least one surface of the light guide element (1, 14), with the exception of the light entry surface (2, 16), an electrical luminescent layer (9, 10; 19) is provided, which is designed to be translucent.

2. Lighting device according to claim 1, **characterized in that** the luminescent layer (9, 10; 19) is designed as an OLED layer.

3. Lighting device according to claim 1, **characterized in that** the luminescent layer (9, 10; 19) is designed as an electroluminescent layer.

4. Lighting device according to any one of claims 1 to 3, illumination device according to any one of claims 1 to 4, **characterized in that** the light guiding element (14) is designed as a hollow cylinder, the two end surfaces of the cylinder wall forming the light entry surface and the light exit surface (16, 15).

5. Lighting device according to claim 4, **characterized in that** the cylinder wall surrounds, at least in sections, the light exit opening (13) of a headlight module (12).

6. lighting device according to any one of claims 1 to 5, **characterized in that characterized in that** the rod-shaped light guide (4; 17) has the same geometry as the light entry surface (2; 16) of the light guide element (1; 14).

7. Lighting device according to one of the claims 1 to 6, **characterized in characterized in that** the light guiding element (1; 14) consists of a transparent material.

8. Lighting device according to any one of claims 4 to 7, **characterized in characterized in that** an electric luminescent layer (19) is applied to outer surfaces of the light conducting light guiding element (14) in the form of a hollow cylinder.

## Revendications

1. Dispositif d'éclairage pour véhicules automobiles avec un élément de guidage de la lumière (1, 14) qui présente une surface d'entrée de la lumière (2, 16) pour la lumière d'au moins une source lumineuse (6, 4 ; 11 ; 17) et une surface de sortie de la lumière (3, 15), un guide de lumière (4 ; 17) étant prévu qui présente au moins un point d'alimentation (5) pour la lumière d'au moins une source lumineuse (6) le guide de lumière (4 ; 17) étant réalisé en forme de tige et présentant, sur au moins une partie de sa longueur, un agencement de points d'interférence (7) et une surface de sortie de lumière (8) opposée à cette dernière, et la surface d'entrée de lumière (2 ; 16) de l'élément de guidage de lumière (1 ; 14) est contiguë à la surface de sortie de la lumière (8) du guide de lumière en forme de tige du point de vue de la technique de la lumière, **caractérisé en ce qu'**il est prévu au moins partiellement sur au moins une surface de l'élément de guidage de lumière (1, 14), à l'exception de la surface d'entrée de lumière (2, 16), une couche électroluminescente (9, 10; 19) est prévue, qui est conçu pour être translucide.

2. Dispositif d'éclairage selon la revendication 1, **caractérisé en ce que** la couche lumineuse (9, 10 ; 19) est conçue comme une couche OLED.

3. Dispositif d'éclairage selon la revendication 1, **caractérisé en ce que** la couche lumineuse (9, 10 ; 19) est conçue comme une couche électroluminescente.

4. Dispositif d'éclairage selon l'une quelconque des revendications 1 à 3, Dispositif d'éclairage selon l'une quelconque des revendications 1 à 4, **caractérisé en ce que** l'élément de guidage de lumière (14) est conçu comme un cylindre creux, les deux surfaces d'extrémité de la paroi du cylindre formant la surface d'entrée de la lumière et la surface de sortie de la lumière (16, 15).

5. Dispositif d'éclairage selon la revendication 4, **caractérisé en ce que** la paroi du cylindre entoure, au moins par sections, l'ouverture de sortie de lumière (13) d'un module de phare (12).

6. Dispositif d'éclairage selon l'une quelconque des revendications 1 à 5, **caractérisé en ce que** le guide de lumière en forme de tige (4 ; 17) est adapté dans sa géométrie à la surface d'entrée de lumière (2 ; 16) de l'élément de guidage de lumière (1 ; 14).

7. Dispositif d'éclairage selon l'une quelconque des revendications 1 à 6, **caractérisé en ce que** l'élément de guidage de la lumière (1 ; 14) est constitué d'un matériau transparent.

8. Dispositif d'éclairage selon l'une quelconque des revendications 4 à 7, **caractérisé en ce qu'**une couche luminescente électrique (19) est prévue sur les surfaces extérieures de l'élément de guidage de lumière (14) formé comme un cylindre creux.
